Europäisches Patentamt

European Patent Office

Office européen des brevets

(19)

(11) Numéro de publication : **0 152 361**
**B1**

(12)

# FASCICULE DE BREVET EUROPÉEN

(45) Date de publication du fascicule du brevet :
02.11.89

(21) Numéro de dépôt : 85420019.3

(22) Date de dépôt : 06.02.85

(51) Int. Cl.⁴ : **G 21 C 17/10, G 01 K 1/16**

(54) **Capteur à temps de réponse réduit pour prise de température à l'intérieur d'une boucle du fluide de refroidissement des réacteurs nucléaires à eau pressurisée.**

(30) Priorité : 07.02.84 FR 8402247

(43) Date de publication de la demande :
21.08.85 Bulletin 85/34

(45) Mention de la délivrance du brevet :
02.11.89 Bulletin 89/44

(84) Etats contractants désignés :
**AT BE CH DE GB IT LI LU NL SE**

(56) Documents cités :
**FR--A-- 2 343 234**
**FR--A-- 2 518 747**
**GB--A-- 1 334 550**
**US--A-- 2 856 341**
**US--A-- 3 061 806**
**NUCLEAR ENGINEERING INTERNATIONAL, vol. 29, no. 350, janvier 1984, pages 34-38, Sutton, Surrey, GB; F. REISCH: "Meeting the need for unambiguous PWR coolant level measurement"**

(73) Titulaire : **PYRO-CONTROLE**
**244, avenue Franklin Roosevelt**
**F-69120 Vaulx en Velin (FR)**

(72) Inventeur : **Geoffray, Rémy**
**39, avenue des Campanuies**
**F-69780 Mions (FR)**
Inventeur : **Jacobzone, Daniel**
**16, rue du Docteur Bonhomme**
**F-69003 Lyon (FR)**

(74) Mandataire : **Maureau, Philippe et al**
**Cabinet Germain & Maureau Le Britannia - Tour C 20, bld Eugène Déruelle Boîte Postale 3011**
**F-69392 Lyon Cedex 03 (FR)**

EP 0 152 361 B1

Jouve, 18, rue St-Denis, 75001 Paris, France

## Description

La présente invention a pour objet un capteur à temps de réponse réduit pour prise de température à l'intérieur d'une boucle du fluide de refroidissement des réacteurs nucléaires à eau pressurisée.

L'invention concerne un capteur permettant la mesure de température d'un fluide dont la connaissance doit être acquise avec :

— une précision déterminée nécessitant d'utiliser la variation de résistivité d'un fil de platine en fonction de la température ;

— une rapidité de réponse déterminée à une variation quelconque de la température ;

— la possibilité de changer le capteur au cours de l'exploitation de l'installation sur laquelle la température du fluide est à mesurer ;

— la reproductibilité des caractéristiques statiques et dynamiques définies ci-dessus.

Une application significative du capteur selon l'invention réside dans la mesure de température du fluide primaire des réacteurs nucléaires à eau pressurisée (REP). Trois fonctions sont principalement assurées par ce type de capteur thermométrique.

1) Mesure de la puissance fournie : la mesure de la puissance fournie est effectuée par l'application d'une loi du type $P = Q_1 - Q_2$ avec $Q(1.2) = MCT(1.2)$ dans laquelle : Q est la quantité de chaleur fournie pendant une unité de temps respectivement à l'entrée de l'échangeur pour $Q_1$, et à la sortie de l'échangeur pour $Q_2$ ;

M est la masse de fluide mesurée pendant l'unité de temps ;

C est la chaleur spécifique du fluide à la température considérée ;

T est la température du fluide.

Si les quantités de fluide à la sortie et à l'entrée de l'échangeur sont égales :

$$P = MC \, \Delta T, \quad \text{où} \quad \Delta T = T_1 - T_2$$

La précision de la mesure de puissance résulte donc de la connaissance précise :

— de la quantité d'eau circulant dans l'installation,

— de la température absolue pour accéder à la connaissance de la chaleur spécifique du fluide et,

— de la différence des températures entrée-sortie de l'échangeur ou générateur de vapeur.

La quantité d'énergie produite par le réacteur nucléaire ne peut être évacuée que dans certaines conditions thermodynamocinétiques au niveau du cœur du réacteur entraînant :

— des débits importants de fluide, et

— un faible gradient thermique.

La précision des instruments de mesure permet actuellement la connaissance du débit à 1 % près et de la température à 0,1 °C près.

2) La sûreté du réacteur REP est assurée par un ensemble de données fournies par différents capteurs situés sur l'installation. Parmi ces données, celle de la température, et notamment la rapidité d'obtention de la température est primordiale pour suivre l'évolution d'un incident ou accident éventuel et permettre les actions de sauvegarde du réacteur.

Le temps de réponse des capteurs thermométriques est fixé à un maximum de quatre secondes pour l'obtention d'un signal équivalent à 63 % de la variation vraie de la température.

3) Les capteurs thermométriques utilisés présentant les caractéristiques remplissant ces exigences, doivent pouvoir être remplacés facilement pour tenir compte des règles de protection contre la radio-activité pour le personnel intervenant dans le bâtiment réacteur au cours de son exploitation.

Ces différentes contraintes ont conduit les constructeurs de réacteurs à réaliser les mesures de température de plusieurs façons :

Une première possibilité consiste à utiliser des capteurs à immersion directe au temps de réponse aussi faible que possible montés sur des tuyauteries auxiliaires dites de by-pass, parallèles à la tuyauterie principale.

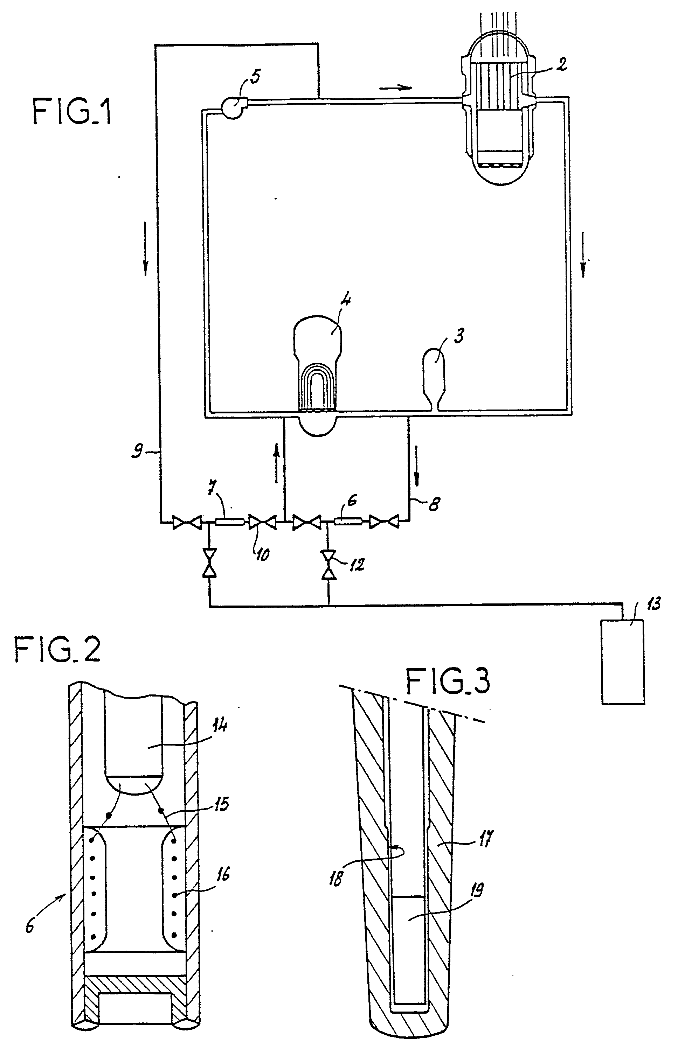

La figure 1 du dessin schématique annexé représente une telle installation, les références (2) désignant le réacteur, (3) le pressuriseur, (4) le générateur de vapeur, et (5) la pompe primaire. Des capteurs, respectivement (6) et (7), sont disposés sur des circuits, respectivement (8) et (9) correspondant aux boucles chaude et froide. Un tel agencement complique considérablement l'installation puisque nécessitant des tuyauteries annexes devant répondre aux normes de sûreté, de nombreux joints soudés, des diaphragmes qui doivent être installés, étalonnés et soudés, et un calorifugeage des tuyauteries, indispensable pour connaître les températures de façon précise.

En outre, le démontage des capteurs en cours d'exploitation nécessite la présence de vannes d'isolement (10), de vannes de vidange (12) du fluide primaire radio-actif, et une installation (13) de récupération du fluide contaminé. La figure 2 représente une vue à échelle agrandie d'un capteur (6) utilisé sur l'installation schématisée à la figure 1 dans lequel la référence (14) désigne un câble, la référence (15) un conducteur et la référence (16) le fil de platine dont la résistivité doit être mesurée.

Outre sa complexité, cette installation présente l'inconvénient de ne pas posséder une durée de vie sûre en raison du caractère fragile des tuyauteries nécessité par le mode de fixation rapide des capteurs, en vue de limiter les temps d'intervention du personnel dans la zone contaminée ou radio-active.

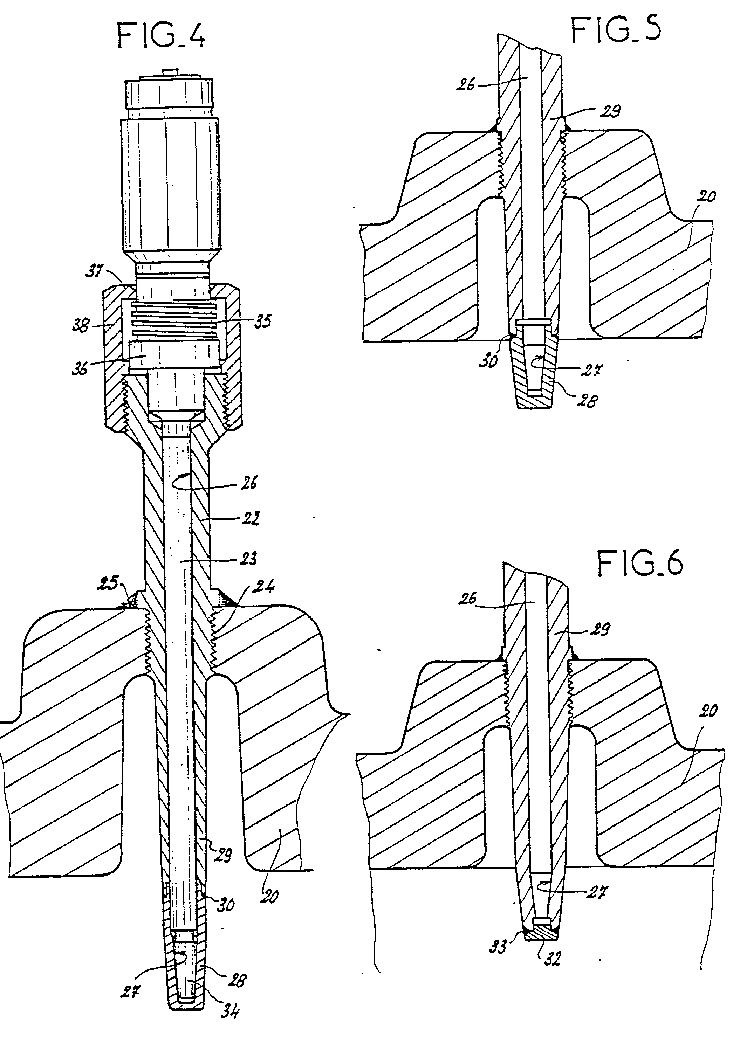

Une deuxième possibilité est celle de la figure 3 du dessin schématique annexé représentant un capteur thermométrique comportant un doigt de gant (17) dont l'extrémité plongeant dans la tuyauterie est fermée. Dans le doigt de gant (17) est ménagé un alésage cylindrique (18) dans lequel est montée une sonde (19) comprenant le fil de platine dont la résistivité est à mesurer. Toutefois, il n'est pas possible de réaliser un ajustement précis entre la sonde (19) et le doigt de gant (17), ce qui conduit à des temps de réponse élevés des mesures de variation de température. En outre, l'ajustage médiocre de la sonde et du doigt de gant se traduit par une susceptibilité vibratoire importante de la sonde, génératrice d'une détérioration rapide de celle-ci.

Le document FR-A-2 518 747 concerne un appareil appartenant au même domaine technique que le capteur selon l'invention. Dans l'appareil du document cité, il est prévu une coupelle disposée entre la sonde elle-même, dont l'extrémité est en forme de tronçon de surface conique, et le doigt de gant. Cette solution ne donne pas entièrement satisfaction, notamment en raison du fait que cette coupelle intermédiaire introduit une inertie thermique augmentant notablement le temps de réponse.

La présente invention vise à remédier à ces inconvénients. A cet effet, le capteur qu'elle concerne est du type comprenant un élément tubulaire ou doigt de gant dont l'extrémité libre est fermée et qui pénètre dans l'enceinte ou le conduit où se trouve le fluide dont la température est à mesurer et à l'intérieur duquel est disposée une sonde équipée d'un fil de platine dont la résistivité varie avec la température est caractérisé en ce que l'extrémité de l'alésage du doigt de gant située du côté fermé de celui-ci possède une forme tronconique, tandis que l'extrémité de la sonde possède une forme tronconique correspondante de façon à être en parfait contact avec cette zone du doigt de gant, en ce que les génératrices des surfaces tronconiques, respectivement de la sonde et du doigt de gant, forment un angle de 3° à une minute près, avec les axes de la sonde et du doigt de gant respectivement, et en ce que les parties en contact de la sonde et du doigt de gant possèdent une rugosité dont l'écart moyen arithmétique (Ra) est inférieur à 0,2.

Les matériaux dans lesquels sont réalisés le doigt de gant et la sonde, étant adaptés aux spécificités de l'appareil dans lequel la température d'un fluide est à mesurer, l'excellent contact entre la sonde et le doigt de gant, obtenu en raison de la forme conique de ces pièces, permet de réduire le temps de réponse de la sonde et d'éviter les vibrations dommageables de cette dernière à l'intérieur du doigt de gant.

Il est donc possible de monter un capteur directement sur le circuit de circulation du fluide à surveiller, sans avoir à recourir à des tuyauteries de by-pass.

Conformément à une autre caractéristique de l'invention, les génératrices des surfaces tronconiques, respectivement de la sonde et du doigt de gant, forment un angle de 3° à une minute près, avec les axes de la sonde et du doigt de gant respectivement.

Avantageusement, les parties en contact de la sonde et du doigt de gant possèdent une rugosité dont l'écart moyen arithmétique (Ra) est inférieur à 0,2.

A titre d'exemple, dans le cas où le doigt de gant est réalisé en acier inoxydable austénitique forgé ou laminé telle la nuance normée Z2 CND 17-12, d'une épaisseur de 3,5 mm, tandis que la sonde réalisée en argent pur ayant subi un traitement de surface, et est équipée d'un élément de mesure en platine d'une résistance de 100 ohms à 5 °C, et dans le cas de son installation sur le circuit primaire d'un réacteur nucléaire, le temps de réponse est de 2,56 secondes à 63 % de l'échelon de température pour les conditions suivantes : température : 285 °C ; pression : 155 bars ; vitesse de fluide : 6 mètres/seconde.

Selon une première forme d'exécution, le doigt de gant est réalisé en deux parties, c'est-à-dire une première partie ouverte à ses deux extrémités et comprenant une zone cylindrique prolongée par une zone tronconique et une seconde partie formant bouchon de fermeture de la première partie, fixée à l'extrémité de la zone tronconique de celle-ci.

D'un point de vue pratique, il est tout d'abord procédé à un alésage cylindrique central d'un bloc de matière, puis à la mise en forme définitive par exemple à l'aide d'un alésoir à queue inversée travaillant à la traction et permettant une réalisation de la zone tronconique avec une bonne précision. Il est ensuite procédé aux opérations de finition polissage et rodage en fonction de l'état de surface souhaité.

Selon une deuxième forme d'exécution, le doigt de gant est réalisé en deux parties, c'est-à-dire une première partie comprenant un alésage cylindrique et une deuxième partie présentant une zone dans laquelle l'alésage est conique, cette deuxième partie étant fermée du côté de la plus petite section de son alésage. Dans ce cas, la première partie est alésée de façon classique, tandis que l'alésage de la seconde partie peut être, compte tenu de sa faible longueur, usiné au tour préalablement aux opérations de rectification et, éventuellement, de polissage et de rodage.

D'autres techniques peuvent être mises en œuvre telles que électro érosion ou voie électrochimique.

En ce qui concerne la forme extérieure et notamment la zone conique de la sonde, elle est obtenue par des moyens d'usinage traditionnels, tels que tournage, rectification, polissage...

Avantageusement, l'évidement interne de la sonde, destiné à recevoir un fil de platine de longueur et diamètre possédant les valeurs ohmiques souhaitées, est maintenu en contact avec l'embout de la sonde par compactage de nitrure de bore de haute pureté à l'état pulvérulent.

De toute façon, l'invention sera bien comprise à l'aide de la description qui suit en référence au dessin schématique annexé représentant, à titre d'exemples non limitatifs, deux formes d'exécution de ce capteur :

Figure 4 est une vue en coupe longitudinale d'un capteur ;

Figures 5 et 6 sont deux vues en coupe longitudinale et à échelle agrandie de deux types de doigts de gant susceptibles d'équiper le capteur de figure 4 ;

Figure 7 est une vue d'un circuit similaire à celui de figure 1 équipé de capteurs thermométriques selon l'invention.

Le capteur selon l'invention, destiné à être monté sur une tuyauterie (20) de façon à faire saillie à l'intérieur de celle-ci, comprend un doigt de gant (22) et une sonde (23). Le doigt de gant (22) est fixé sur la tuyauterie à l'aide d'un filetage (24) et d'une collerette soudée (25). Le doigt de gant comporte, sur la presque totalité de sa longueur, un alésage (26) cylindrique, prolongé à son extrémité fermée par un alésage (27) de forme tronconique. La zone (27) présentant une forme tronconique peut soit être ménagée dans un embout (2S) rapporté sur une pièce principale (29) avec fixation de l'une sur l'autre par une soudure (30), soit être ménagée dans la partie (29) comportant l'alésage cylindrique, l'alésage conique étant dans ce cas ouvert, afin de permettre son usinage avant d'être obturé par un bouchon (32) fixé par une soudure (33).

Comme montré à la figure 4, la sonde (23) de forme générale cylindrique possède une extrémité (34) de forme tronconique de même conicité que la zone (27), de façon à pouvoir s'adapter parfaitement dans cette dernière. Le contact entre l'extrémité (34) de la sonde et la zone tronconique (27) du doigt de gant est favorisé par une pression élastique procurée par un ressort (35) prenant appui, d'une part, sur un épaulement (36) de la sonde et, d'autre part, sur une collerette (37) tournée vers l'intérieur, solidaire d'un écrou (38) vissé sur le doigt de gant (22).

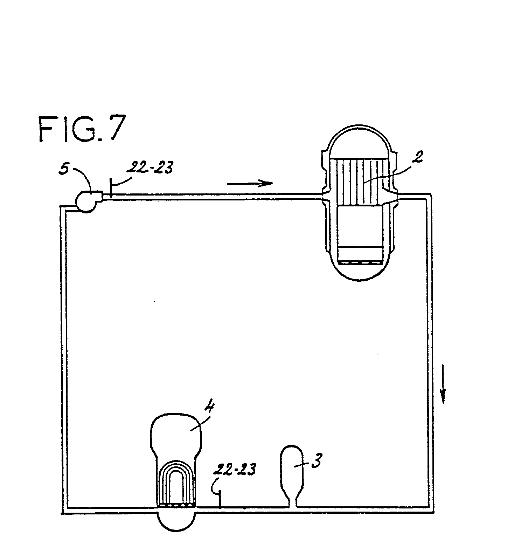

Ce capteur dont la structure a été définie précédemment de façon plus précise permet, comme montré à la figure 7, son montage directement à l'intérieur du circuit de circulation du fluide primaire d'un réacteur nucléaire, comme montré à la figure 7. Outre que le fait qu'un tel capteur permet des mesures avec un temps de réponse très rapide, il faut noter qu'il possède une excellente fiabilité, qu'éventuellement la sonde peut être changée en période d'exploitation et qu'il évite le montage des circuits de by-pass, ce qui constitue une économie très importante par rapport à la solution envisagée à la figure 1.

Comme il va de soi, l'invention ne se limite pas aux seules formes d'exécution de ce capteur, ni à sa seule application décrites ci-dessus à titre d'exemples ; elle en embrasse, au contraire, toutes les variantes de réalisation et d'application.

## Revendications

1. Capteur à temps de réponse réduit pour prise de température à l'intérieur d'une boucle du fluide de refroidissement des réacteurs nucléaires à eau pressurisée, du type comprenant un élément tubulaire ou doigt de gant (22) dont l'extrémité libre est fermée et qui pénètre dans l'enceinte ou le conduit où se trouve le fluide dont la température est à mesurer et à l'intérieur duquel est disposée une sonde (23) équipée d'un fil de platine dont la résistivité varie avec la température, caractérisé en ce que l'extrémité (27) de l'alésage du doigt de gant située du côté fermé de celui-ci possède une forme tronconique, tandis que l'extrémité (34) de la sonde possède une forme tronconique correspondante de façon à être en parfait contact avec cette zone du doigt de gant, en ce que les génératrices des surfaces tronconiques, respectivement de la sonde (23) et du doigt de gant (22), forment un angle de 3° à une minute près, avec les axes de la sonde et du doigt de gant respectivement, et en ce que les parties en contact de la sonde (23) et du doigt de gant (22) possèdent une rugosité dont l'écart moyen arithmétique (Ra) est inférieur à 0,2.

2. Capteur selon la revendication 1, caractérisé en ce que le doigt de gant (22) est réalisé en deux parties, c'est-à-dire une première partie ouverte à ses deux extrémités et comprenant une zone cylindrique (26) prolongée par une zone tronconique (27) et une seconde partie (32) formant bouchon de fermeture de la première partie, fixée à l'extrémité de la zone tronconique de celle-ci.

3. Capteur selon la revendication 1, caractérisé en ce que le doigt de gant est réalisé en deux parties, c'est-à-dire une première partie (29) comprenant un alésage cylindrique (26) et une deuxième partie (28) présentant une zone dans laquelle l'alésage (27) est conique, cette deuxième partie étant fermée du côté de la plus petite section de son alésage.

4. Capteur selon l'une quelconque des revendications 1 à 3, caractérisé en ce que l'évidement interne de la sonde, destiné à recevoir le fil de platine de longueur et diamètre possédant les valeurs ohmiques souhaitées, est maintenu en contact avec l'embout de la sonde par compactage de nitrure de bore de haute pureté à l'état pulvérulent.

## Claims

1. Sensor with reduced response time for taking the temperature inside a loop of the pressurised water nuclear reactors cooling liquid of the type consisting of a tubular or glove finger shaped element (22), one end of which is free and closed and which penetrates into the enclosed space or into the pipe which contains the liquid of which the temperature is to be measured and which has a probe (23) fitted with a platinum wire inside which has a resistivity that varies with the temperature, characterised in that the end (27) of the bore of the glove finger element located on the closed side of same has a truncated cone shape, whereas the end (34) of the probe has a matching truncated cone shape such as to be in perfect contact with this zone of the glove finger element in which the generatrices of the truncated cone shaped areas, of the probe (23) and of the glove finger (22) respectively form an angle of 3° to within 1 minute with the axes of the probe, and of the glove finger element respectively, and in which the sections of the probe (23) and of the glove finger element (22) in contact have a roughness of which the arithmetic mean variation (Ra) is less than 0.2.

2. Sensor as in claim 1, characterised in that the glove finger element (22) is made in two sections, i. e. the first section open at its two ends and comprising a cylindrical zone (26) extended by a truncated cone shaped zone (27) and a second section (32) forming a sealing plug for the first section, fixed to the end of the truncated cone section of same.

3. Sensor as in claim 1, characterised in that the glove finger element is produced in two sections, i. e. a first section (29) consisting of a cylindrical bore (26) and a second section (28) forming a zone in which the bore (27) is cone shaped, with this second section enclosed on the side of the smallest section of its bore.

4. Sensor as in any one of claims 1 to 3 inclusive, characterised in that the internal chamber of the probe intended to house the platinum wire with length and diameter with the desired ohmic values is held in contact with the tip of the probe by compacting high purity boron nitride in a powdery state.

## Patentansprüche

1. Temperaturfühler mit verringerter Ansprechzeit zur Erfassung der Temperatur im Innern eines Kühlkreises von Druckwasser-Kernreaktoren mit einem rohrförmigen Element oder Hohlfinger (22), dessen geschlossener freier Endbreich in die Hülle oder die Leitung eindringt, in der sich die Flüssigkeit befindet, deren Temperatur gemessen werden soll, wobei im Innern des Hohlfingers eine Sonde (23) angeordnet ist, die mit einem Platindraht ausgestattet ist, dessen spezifischer Widerstand sich mit der Temperatur ändert, dadurch gekennzeichnet, daß der an der geschlossenen Seite des Hohlfingers liegende Endbereich (27) der Bohrung des Hohlfingers Kegelstumpfform hat, während der Endbereich (34) eine korrespondierende Kegelstumpfform hat, so daß er in vollkommener Berührung mit diesem Bereich steht, daß die Mantellinien der Kegelstumpfflächen der Sonde (23) bzw. des Hohlfingers (22) mit den Achsen der Sonde bzw. des Hohlfingers einen Winkel von 3° mit einer Genauigkeit von etwa einer Winkelminute bilden, und daß die einander berührenden Teile der Sonde (23) und des Hohlfingers (22) eine Rauhheit haben, deren Rauhtiefe im arithmetischen Mittel unter 0,2 liegt.

2. Fühler nach Anspruch 1, dadurch gekennzeichnet, daß der Hohlfinger (22) aus zwei Teilen besteht, nämlich aus einem an seinen beiden Enden offenen ersten Teil mit einem zylindrischem Bereich (26), der von einem kegelstumpfförmigen Bereich verlängert wird, und einem einen Verschlußpropfen für den ersten Teil bildenden zweiten Teil (32), der an dem Ende von dessen kegelstumpfförmigem Bereich befestigt ist.

3. Fühler nach Anspruch 1, dadurch gekennzeichnet, daß der Hohlfinger (22) aus zwei Teilen besteht, nämlich aus einem ersten Teil (29) mit einer zylindrischen Bohrung (26) und einem zweiten Teil (28) mit einem Bereich, in dem die Bohrung (27) konisch ist, wobei dieser zweite Teil auf der durchmesserkleineren Seite seiner Bohrung geschlossen ist.

4. Fühler nach einem der Ansprüche 1 bis 3, dadurch gekennzeichnet, daß die innere Ausnehmung der Sonde, die zur Aufnahme des Platindraht dient, dessen Länge und Durchmesser den gewünschten Widerstandswerten entsprechen, mit dem Einsatzteil der Sonde durch Verdichtung von hochreinem pulverpförmigem Bornitrid in Kontakt gehalten wird.

**FIG.1**

**FIG.2**

**FIG.3**

# FIG_4

# FIG_5

# FIG_6

# FIG.7